# EUROPEAN PATENT APPLICATION

(11) **EP 4 806 678 A1**
(43) Date of publication of application: **16.09.2026**
(21) Application number: 24887712.8
(22) Date of filing: 14.10.2024
(51) Int. Cl.: B60H 1/00

(54) **THERMAL MANAGEMENT SYSTEM AND USE THEREOF**

(30) Priority: 07.11.2023 CN 202311470591
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: XING, Xiaodong, Ningbo, Zhejiang 315899 (CN); XIA, Songyong, Ningbo, Zhejiang 315899 (CN); HU, Lei, Ningbo, Zhejiang 315899 (CN); WANG, Jian, Ningbo, Zhejiang 315899 (CN)
(74) Representative: Murgitroyd & Company
(86) International application number: PCT/CN2024/124780
(87) International publication number: WO 2025/098099

(57) **Abstract**

A thermal management system and the use thereof. The thermal management system comprises: an electric drive cooling system (10) and a battery temperature control system (20); a first three-way proportional valve (11), arranged inside the electric drive cooling system (10) or the battery temperature control system (20); a liquid mixing chamber (30), the liquid mixing chamber (30) being arranged between the electric drive cooling system (10) and the battery temperature control system (20), and the battery temperature control system (20) being connected in series, in parallel, or partially in series and partially in parallel to the electric drive cooling system (10) by means of the first three-way proportional valve (11) and the liquid mixing chamber (30); a battery auxiliary heating system (40), the battery auxiliary heating system (40) comprising a second three-way proportional valve (41); an air conditioning system (50), the air conditioning system (50) being connected to the battery temperature control system (20); and a liquid storage tank (60), the liquid storage tank (60) being connected to the electric drive cooling system (10) and the liquid mixing chamber (30). The thermal management system and a new energy vehicle can accurately balance the temperature of the electric drive cooling system (10) and the battery temperature control system (20), and simplify the connection structure between the electric drive cooling system (10) and the battery temperature control system (20), thus reducing the production cost.

## Description

This application claims priority to Chinese Patent Application No. 202311470591.4, filed with the Chinese Patent Office on November 7, 2023 and entitled "THERMAL MANAGEMENT SYSTEM AND USE THEREOF ", which is incorporated herein by reference in its entirety.

### TECHNICAL FIELD

This application relates to the field of vehicle heat management technologies, and in particular, to a thermal management system and use thereof.

### BACKGROUND

The thermal management system of a vehicle directly affects the vehicle safety and passenger experience. The thermal management system needs to coordinate the heat distribution among subsystems such as air conditioning, battery and electric drive, to solve the thermal-related problems of the whole vehicle and ensure that each subsystem operates in its optimal temperature range. In the prior art, a series or a parallel between an electric drive cooling system and a battery temperature control system is implemented by using a complex five-way valve. However, the five-way valve has a complex structure, high flow resistance, and high power requirement for the subsystem.

### SUMMARY

In view of the foregoing disadvantages of the prior art, an objective of this application is to provide a thermal management system and use thereof, so as to accurately balance temperature of an electric drive cooling system and a battery temperature control system, simplify a connection structure between the two systems, and reduce production costs.

To resolve the foregoing technical problems, this application is implemented by using the following technical solutions.

This application provides a thermal management system, including:
an electric drive cooling system and a battery temperature control system;
a first three-way proportional valve is disposed in the electric drive cooling system or the battery temperature control system;
a liquid mixing chamber, where the liquid mixing chamber is disposed between the electric drive cooling system and the battery temperature control system, and the battery temperature control system is connected to the electric drive cooling system in series, in parallel, or partially in series and partially in parallel by using the first three-way proportional valve and the liquid mixing chamber;
a battery auxiliary heating system, where the battery auxiliary heating system includes a second three-way proportional valve;
an air conditioning system, where the air conditioning system is connected to the battery temperature control system; and
a reservoir, where the reservoir is connected to the electric drive cooling system and the liquid mixing chamber.

In an embodiment of this application, the first three-way proportional valve includes a first port, a second port, and a third port.

In an embodiment of this application, the electric drive cooling system and the battery temperature control system are connected in series when the first port and the second port are fully connected.

In an embodiment of this application, the electric drive cooling system and the battery temperature control system are connected in parallel when the first port and the third port are fully connected.

In an embodiment of this application, when the first port and the second port are partially connected, and the first port and the third port are partially connected, a connection between the electric drive cooling system and the battery temperature control system includes both partial series and partial parallel configurations.

In an embodiment of this application, a first outlet and a second outlet are disposed on an outer wall of the liquid mixing chamber, the first outlet is connected to one of the electric drive cooling system and the battery temperature control system, and the second outlet is connected to the other of the battery temperature control system and the electric drive cooling system.

In an embodiment of this application, a first inlet and a second inlet are further disposed on an outer wall of the liquid mixing chamber, the first inlet is connected to one of the electric drive cooling system and the battery temperature control system, and the second inlet is connected to the other of the battery temperature control system and the electric drive cooling system.

In an embodiment of this application, the battery auxiliary heating system is disposed on a side adjacent to the second inlet, and is connected to a battery temperature control system via pipeline.

In an embodiment of this application, the second three-way proportional valve includes a first interface, and the first interface is connected to the battery temperature control system.

This application further discloses a new energy vehicle, where the new energy vehicle includes the foregoing thermal management system.

In conclusion, this application provides a thermal management system and use thereof. By using the first three-way proportional valve and the liquid mixture chamber, heat distribution between the electric drive cooling system and the battery temperature control system can be accurately balanced. This simplifies a connection structure between the electric drive cooling system and the battery temperature control system, thereby reducing production costs. In addition, the reservoir is directly connected to the liquid mixing chamber, thereby improving filling efficiency during vehicle production, and improving vehicle production efficiency.

Certainly, any manner of implementing this application does not necessarily require all the foregoing advantages to be simultaneously achieved.

### BRIEF DESCRIPTION OF DRAWINGS

To describe the technical solutions of the embodiments of this application more clearly, the following briefly describes the accompanying drawings required for describing the embodiments. Apparently, the accompanying drawings in the following description show merely some embodiments of this application, and a person of ordinary skill in the art may still derive other drawings from these accompanying drawings without creative efforts.
FIG. 1 is a schematic diagram of a thermal management system according to an embodiment of this application.
FIG. 2 is a schematic diagram of a thermal management system according to another embodiment of this application.
FIG. 3 is a schematic diagram of a thermal management system according to still another embodiment of this application.

### Label description:

10. electric drive cooling system 20. battery temperature control system; 30. liquid mixing chamber; 40. battery auxiliary heating system; 50. air conditioning system; 60. reservoir 70. temperature measurement apparatus; 11. first three-way proportional valve; 12. electric drive coolant pump; 13. electric drive assembly; 14. electric drive radiator; 21. battery coolant pump; 22. refrigerant heat exchanger; 23. power battery; 41. second three-way proportional valve; 42. warm air coolant pump; 43. electric heater; 44. warm air core; 51. compressor; 52. condenser; 53. evaporator; 111. first port. 112. second port. 113. third port. 301. first outlet. 302. second outlet. 303. first inlet; 304. second inlet. 411. first interface; 412. second interface. 413. third interface.

### DESCRIPTION OF EMBODIMENTS

The following describes an implementation manner of this application by using a specific example. A person skilled in the art may easily understand other advantages and effects of this application by using the content disclosed in this specification. This application may also be implemented or applied in another specific implementation manner. Details in this specification may also be modified or changed based on different perspectives and applications without departing from the spirit of this application. It should be noted that, in a case of no conflict, the following embodiments and features in the embodiments may be mutually combined.

It should be noted that the diagram provided in the following embodiments merely describes the basic concept of this application in a schematic manner. Therefore, only the components related to this application are displayed in the diagram, rather than being drawn according to a quantity, a shape, and a size of the components in actual implementation. A type, a quantity, and a proportion of each component in actual implementation of the component may be randomly changed, and a component layout type of the component may be more complex.

In this application, it should be noted that, if the terms "center", "top", "bottom", "left", "right", "vertical", "horizontal", "inside", "outside" appear, the azimuth or location relationship indicated by the term "center", "top", "bottom", "left", "right", "right", "horizontal", "inside", "outside" are based on the azimuth or location relationship shown in the accompanying drawings, and is merely for ease of describing the present application and simplification description, and is not intended to indicate or imply that the referred apparatus or component must have a specific azimuth, and be constructed and operated with a specific azimuth, which is not understood as a limitation of this application. In addition, if the terms "first" and "second" appear for description and distinction purposes only, they are not understood to indicate or imply relative importance.

The thermal management system of a vehicle directly affects the vehicle safety and passenger experience. The thermal management system needs to coordinate the heat distribution among subsystems such as air conditioning, battery and electric drive subsystems, to solve the thermal-related problems of the whole vehicle and ensure that each subsystem operates in its optimal temperature range. In the prior art, a series or a parallel between an electric drive cooling system and a battery temperature control system is implemented by using a complex five-way valve. However, the five-way valve cannot regulate the coolant flow between the series-connected electric drive cooling system and the battery temperature control system, so that the temperature of the electric drive cooling system and the battery temperature control system cannot be accurately balanced. In addition, the five-way valve has a complex structure, high flow resistance, and high power requirement for the subsystem.

To solve the foregoing problems, this application provides a thermal management system and use thereof. By controlling a coolant flow between an electric drive cooling system and a battery temperature control system, heat distribution between the two systems is balanced. This simplifies a connection structure between the two systems, thereby reducing production costs. In addition, the reservoir is directly connected to the liquid mixing chamber, thereby improving filling efficiency during vehicle production, and improving vehicle production efficiency.

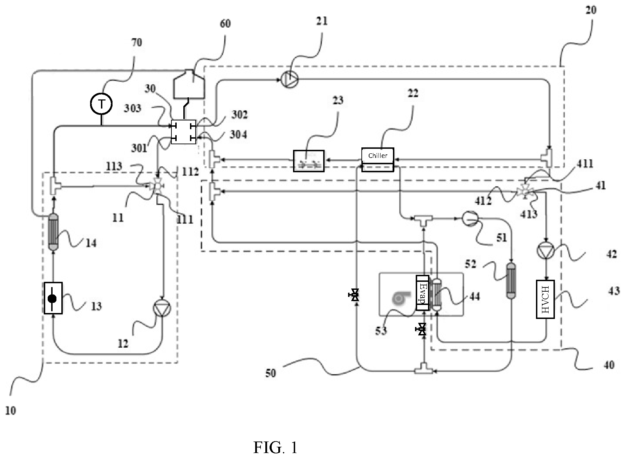

Referring to FIG. 1 to FIG. 3, in an embodiment of this application, a thermal management system provided in this application includes an electric drive cooling system 10, a battery temperature control system 20, a liquid mixing chamber 30, a battery auxiliary heating system 40, an air conditioning system 50, a reservoir 60, a temperature measurement apparatus 70, and the like. The first three-way proportional valve 11 is disposed in, for example, an electric drive cooling system 10 or a battery temperature control system 20. The battery auxiliary heating system 40 includes, for example, a second three-way proportional valve 41. By using the two simple structures of the first three-way proportional valve 11 and the liquid mixture chamber 30, the electric drive cooling system 10 and the battery temperature control system 20 can be connected in series, in parallel, or partially in series and partially in parallel , so as to balance heat distribution between the two systems and reduce production costs.

Referring to FIG. 1 to FIG. 3, in an embodiment of this application, the electric drive cooling system 10 includes an electric drive coolant pump 12, an electric drive assembly 13, an electric drive radiator 14, and the like. The electric drive coolant pump 12, the electric drive assembly 13, and the electric drive radiator 14 are connected in sequence. The electric drive coolant pump 12 provides power for the electric drive cooling system 10, so that the coolant flows smoothly by overcoming resistance such as a pipe in the entire electric drive cooling system 10. The electric drive assembly 13 converts a high voltage electricity into a drive kinetic energy, and transmits the drive kinetic energy to a wheel, so as to drive a vehicle, for example, includes a drive motor, a motor controller, and a reducer. When a new energy vehicle drives a motor and an electronic control apparatus, a great deal of heat is generated. If the heat is not removed in a timely manner, performance of the drive motor is affected, a life of the motor is reduced, and even serious cases are caused. Therefore, in the electric drive radiator 14, the coolant exchanges heat with the ambient air, and removes heat generated by driving, so as to protect the vehicle.

Referring to FIG. 1, in another embodiment of this application, the electric drive cooling system 10 further includes a first three-way proportional valve 11. In this embodiment, the first three-way proportional valve 11, the electric drive coolant pump 12, the electric drive assembly 13, and the electric drive radiator 14 are connected in sequence to form a loop. The first three-way proportional valve 11 includes a first port 111, a second port 112, and a third port 113. The first port 111 is an outlet of the first three-way proportional valve 11, and is connected to a side of the electric drive coolant pump 12 away from the electric drive assembly 13. The second port 112 is one of the inlets of the first three-way proportional valve 11, and is connected to the first outlet 301. The third port 113 is another inlet of the first three-way proportional valve 11, and is connected to a side of the electric drive radiator 14 away from the electric drive assembly 13. When the first port 111 is fully connected to the second port 112, that is, the coolant can flow only between the first port 111 and the second port 112, the electric drive cooling system 10 is connected to the battery temperature control system 20 in series. When the first port 111 is fully connected to the third port 113, that is, the coolant can flow only between the first port 111 and the third port 113, the electric drive cooling system 10 is connected to the battery temperature control system 20 in parallel. When the first port 111 is partially connected to the second port 112, and the first port 111 is partially connected to the third port 113, that is, the partial coolant flows between the first port 111 and the second port 112, and the partial coolant flows between the first port 111 and the third port 113, the connection between the electric drive cooling system 10 and the battery temperature control system 20 includes both partial series and partial parallel configurations.

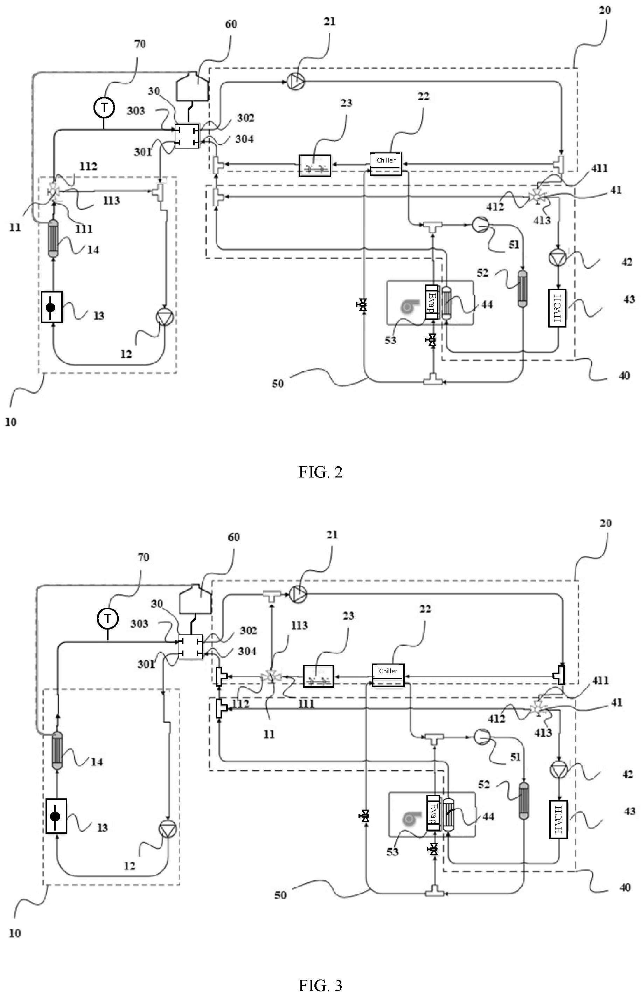

Referring to FIG. 2, in another embodiment of this application, the first three-way proportional valve 11 is disposed on a side of the electric drive radiator 14 away from the electric drive assembly 13, and the electric drive coolant pump 12, the electric drive assembly 13, the electric drive radiator 14, and the first three-way proportional valve 11 are connected in sequence to form a loop. The first three-way proportional valve 11 includes a first port 111, a second port 112, and a third port 113. The first port 111 is an inlet of the first three-way proportional valve 11, and is connected to a side of the electric drive radiator 14 away from the electric drive assembly 13. The second port 112 is one of outlets of the first three-way proportional valve 11, and is connected to the first inlet 303. The third port 113 is another outlet of the first three-way proportional valve 11, and is connected to a side of the electric drive coolant pump 12 away from the electric drive assembly 13. When the first port 111 is fully connected to the second port 112, that is, the coolant can flow only between the first port 111 and the second port 112, the electric drive cooling system 10 is connected to the battery temperature control system 20 in series. When the first port 111 is fully connected to the third port 113, that is, the coolant can flow only between the first port 111 and the third port 113, the electric drive cooling system 10 is connected to the battery temperature control system 20 in parallel. When the first port 111 is partially connected to the second port 112, and the first port 111 is partially connected to the third port 113, that is, the partial coolant flows between the first port 111 and the second port 112, and the partial coolant flows between the first port 111 and the third port 113, the connection between the electric drive cooling system 10 and the battery temperature control system 20 includes both partial series and partial parallel configurations.

Referring to FIG. 3, in still another embodiment of this application, the first three-way proportional valve 11 is located in the battery temperature control system 20, and is specifically disposed between the liquid mixture chamber 30 and the power battery 23. The first three-way proportional valve 11 includes a first port 111, a second port 112, and a third port 113. The first port 111 is an inlet of the first three-way proportional valve 11, and is connected to a side of the power battery 23 away from the refrigerant heat exchanger 22. The second port 112 is one of outlets of the first three-way proportional valve 11, and is connected to the second inlet 304. The third port 113 is another outlet of the first three-way proportional valve 11, and is connected to a side of the battery coolant pump 21 away from the refrigerant heat exchanger 22. When the first port 111 is fully connected to the second port 112, that is, the coolant can flow only between the first port 111 and the second port 112, the electric drive cooling system 10 is connected to the battery temperature control system 20 in series. When the first port 111 is fully connected to the third port 113, that is, the coolant can flow only between the first port 111 and the third port 113, the electric drive cooling system 10 is connected to the battery temperature control system 20 in parallel. When the first port 111 is partially connected to the second port 112, and the first port 111 is partially connected to the third port 113, that is, the partial coolant flows between the first port 111 and the second port 112, and the partial coolant flows between the first port 111 and the third port 113, the connection between the electric drive cooling system 10 and the battery temperature control system 20 includes both partial series and partial parallel configurations.

Referring to FIG. 1 to FIG. 3, in an embodiment of this application, the battery temperature control system 20 further includes a battery coolant pump 21, a refrigerant heat exchanger 22, a power battery 23, and the like that are sequentially connected. The battery coolant pump 21 provides power for the battery temperature control system 20, so that the coolant flows smoothly by overcoming resistance from a pipeline or other components in the entire battery temperature control system 20. The power battery 23 is an energy source of the electric vehicle. Because of charging and discharging, the power battery 23 generates a certain amount of heat, but the heat affects parameters such as a capacity, charging and discharging efficiency, and battery lifespan of the power battery 23. Therefore, a refrigerant of the air conditioning system 50 is introduced into the refrigerant heat exchanger 22, and the refrigerant takes away heat in the battery temperature control system 20, so as to achieve an objective of cooling the power battery 23. The refrigerant may be, for example, water or ethylene glycol.

Referring to FIG. 1 to FIG. 3, in an embodiment of this application, the liquid mixture chamber 30 is disposed between the electric drive cooling system 10 and the battery temperature control system 20, and its structure may be, for example, a cube, a rectangular prism, or a cylinder. In the liquid mixing chamber 30, coolant from the electric drive cooling system 10, the battery temperature control system 20, or the battery auxiliary heating system 40 is mixed for heat exchange, and then enters the electric drive cooling system 10 or the battery temperature control system 20. In this embodiment, an outer wall of the liquid mixing chamber 30 includes a first outlet 301, a second outlet 302, a first inlet 303, a second inlet 304, and the like.

Referring to FIG. 1, in an embodiment of this application, the first outlet 301 is connected to the second port 112, the second outlet 302 is connected to a side of the battery coolant pump 21 away from the refrigerant heat exchanger 22, the first inlet 303 is connected to a side of the electric drive radiator 14 away from the electric drive assembly 13, and the second inlet 304 is connected to a side of the power battery 23 away from the refrigerant heat exchanger 22. In this embodiment, when the first port 111 and the second port 112 of the first three-way proportional valve 11 are fully connected, coolant in the electric drive cooling system 10 enters the liquid mixing chamber 30 through the first inlet 303 of the liquid mixing chamber 30, leaves the liquid mixing chamber 30 from the second outlet 302, enters the battery control temperature system 20, flows through the refrigerant heat exchanger 22 and the power battery 23, enters the liquid mixing chamber 30 through the second inlet 304, leaves the liquid mixing chamber 30 from the first outlet 301, and then returns to the electric drive cooling system 10 through the first port 111 and the second port 112. In this case, the electric drive cooling system 10 and the battery control temperature system 20 are connected in series, so that the coolant circulates in the two systems to control temperature of the electric drive assembly 13 and the power battery 23. When the first port 111 and the third port 113 of the first three-way proportional valve 11 are fully connected, the coolant in the electric drive cooling system 10 circulates only in the first three-way proportional valve 11, the electric drive coolant pump 12, the electric drive assembly 13, and the electric drive radiator 14. The coolant in the battery control temperature system 20 circulates only in the battery coolant pump 21, the refrigerant heat exchanger 22, the power battery 23, and the liquid mixing chamber 30. In this case, the electric drive cooling system 10 and the battery control temperature system 20 are connected in parallel, and the coolant circulates independently in the two systems, The heat exchange of the electric drive assembly 13 and the power battery 23 is separately controlled by the electric drive radiator 14 and the refrigerant heat exchanger 22 in their respective systems. When the first port 111 and the second port 112 of the first three-way proportional valve 11 are partially connected, and the first port 111 and the third port 113 are partially connected , a part of the coolant circulates within the electric drive cooling system 10 through the first port 111 and the third port 113, and the other part of the coolant enters the liquid mixing chamber 30 through the first inlet 303 of the liquid mixing chamber 30, leaves the liquid mixing chamber 30 from the second outlet 302, enters the battery control temperature system 20, flows through the refrigerant heat exchanger 22 and the power battery 23, enters the liquid mixing chamber 30 through the second inlet 304, leaves the liquid mixing chamber 30 from the first outlet 301, and then returns to the electric drive cooling system 10 through the first port 111 and the second port 112. In this case, the connection between the electric drive cooling system 10 and the battery control temperature system 20 includes both partial series and partial parallel configurations, enabling heat exchange between a part of the coolant in the electric drive cooling system 10 and the coolant in the battery control temperature system 20. This increases the cooling capacity in the electric drive cooling system 10 to prevent that a separate electric drive radiator 14 cannot meet a heat dissipation requirement of the electric drive cooling system 10 under extreme high temperature conditions.

Referring to FIG. 2, in another embodiment of this application, the first outlet 301 is connected to a side of the electric drive coolant pump 12 away from the electric drive assembly 13, the second outlet 302 is connected to a side of the battery coolant pump 21 away from the refrigerant heat exchanger 22, the first inlet 303 is connected to the second port 112, and the second inlet 304 is connected to a side of the power battery 23 away from the refrigerant heat exchanger 22. In this embodiment, when the first port 111 and the second port 112 of the first three-way proportional valve 11 are fully connected, coolant in the electric drive cooling system 10 enters the liquid mixing chamber 30 through the first port 111, the second port 112, and the first inlet 303 of the liquid mixing chamber 30, leaves the liquid mixing chamber 30 from the second outlet 302, enters the battery control temperature system 20, flows through the refrigerant heat exchanger 22 and the power battery 23, enters the liquid mixing chamber 30 through the second inlet 304, leaves the liquid mixing chamber 30 from the first outlet 301, and then returns to the electric drive cooling system 10. In this case, the electric drive cooling system 10 and the battery control temperature system 20 are connected in series, so that the coolant circulates in the two systems to control temperature of the electric drive assembly 13 and the power battery 23. When the first port 111 and the third port 113 of the first three-way proportional valve 11 are fully connected, the coolant in the electric drive cooling system 10 circulates only in the first three-way proportional valve 11, the electric drive coolant pump 12, the electric drive assembly 13, and the electric drive radiator 14. The coolant in the battery control temperature system 20 circulates only in the battery coolant pump 21, the refrigerant heat exchanger 22, the power battery 23, and the liquid mixing chamber 30. In this case, the electric drive cooling system 10 and the battery control temperature system 20 are connected in parallel, and the coolant circulates independently in the two systems, and heat exchange between the electric drive heat sink 13 and the power battery 23 is separately controlled by the electric drive radiator 14 and the refrigerant heat exchanger 22 in their respective systems. When the first port 111 and the second port 112 of the first three-way proportional valve 11 are partially connected, and the first port 111 and the third port 113 are partially connected, the part of coolant circulates within the electric drive cooling system 10 through the first port 111 and the third port 113, and the other part of coolant enters the liquid mixing chamber 30 through the first port 111, the second port 112, and the first inlet 303 of the liquid mixing chamber 30, leaves the liquid mixing chamber 30 from the second outlet 302, enters the battery control temperature system 20, flows through the refrigerant heat exchanger 22 and the power battery 23, and enters the liquid mixing chamber 30 through the second inlet 304, leaves the liquid mixing chamber 30 from the first outlet 301, and then returns to the electric drive cooling system 10. In this case, the connection between the electric drive cooling system 10 and the mixed liquid control temperature system 20 includes both partial series and partial parallel configurations, enabling heat exchange between a part of the coolant in the electric drive cooling system 10 and the coolant in the battery control temperature system 20. This increases the cooling capacity in the electric drive cooling system 10 to prevent that a separate electric drive radiator 14 cannot meet a heat dissipation requirement of the electric drive cooling system 10 under extreme high temperature conditions.

Referring to FIG. 3, in another embodiment of this application, the first outlet 301 is connected to a side of the electric drive coolant pump 12 away from the electric drive assembly 13, the second outlet 302 is connected to a side of the battery coolant pump 21 away from the refrigerant heat exchanger 22, the first inlet 303 is connected to a side of the electric drive radiator 14 away from the electric drive assembly 13, and the second inlet 304 is connected to the second port 112. In this embodiment, when the first port 111 and the second port 112 of the first three-way proportional valve 11 are fully connected, coolant in the electric drive cooling system 10 enters the liquid mixing chamber 30 through the first inlet 303 of the liquid mixing chamber 30, leaves the liquid mixing chamber 30 from the second outlet 302, enters the battery control temperature system 20, flows through the refrigerant heat exchanger 22 and the power battery 23, enters the liquid mixing chamber 30 through the first port 111, the second port 112, and the second inlet 304, leaves the liquid mixing chamber 30 from the first outlet 301, and then returns to the electric drive cooling system 10. In this case, the electric drive cooling system 10 and the battery control temperature system 20 are connected in series, so that the coolant circulates in the two systems to control the temperature of the electric drive assembly 13 and the power battery 23. When the first port 111 and the third port 113 of the first three-way proportional valve 11 are fully connected, the coolant in the electric drive cooling system 10 circulates only in the electric drive coolant pump 12, the electric drive assembly 13, and the electric drive radiator 14, while the coolant in the battery control temperature system 20 circulates only in the battery coolant pump 21, the refrigerant heat exchanger 22, the power battery 23, and the first three-way proportional valve 11. In this case, the electric drive cooling system 10 and the battery control temperature system 20 are connected in parallel, and the coolant circulates independently in the two systems. Heat exchange between the electric drive assembly 13 and the power battery 23 is separately controlled by the electric drive radiator 14 and the refrigerant heat exchanger 22 in their respective systems. When the first port 111 and the second port 112 of the first three-way proportional valve 11 are partially connected , and the first port 111 and the third port 113 are partially connected , a part of the coolant circulates within the battery temperature control system 20 through the first port 111 and the third port 113. The other part of the coolant enters the liquid mixing chamber 30 through the first port 111, the second port 112, and the second inlet 304 of the liquid mixing chamber 30, leaves the liquid mixing chamber 30 from the first outlet 301, enters the electric drive cooling system 10, flows through the electric drive coolant pump 12, the electric drive assembly 13, and the electric drive radiator 14, enters the liquid mixing chamber 30 through the first inlet 303, leaves the liquid mixing chamber 30 from the second outlet 302, and then returns to the battery temperature control system 20. In this case, the connection between the electric drive cooling system 20 and the battery temperature control system 20 includes both partial series and partial parallel configurations, enabling heat exchange between a part of the coolant in the battery temperature control system 20 and the coolant in the electric drive cooling system 10. This increases the cooling capacity in the electric drive cooling system 10 to prevent that a separate electric drive radiator 14 cannot meet a heat dissipation requirement of the electric drive cooling system 10 under extreme high temperature conditions.

Referring to FIG. 1 to FIG. 3, in an embodiment of this application, the battery auxiliary heating system 40 includes a second three-way proportional valve 41, a warm air coolant pump 42, an electric heater 43, and a warm air core 44 that are sequentially connected. The second three-way proportional valve 41 includes a first interface 411, a second interface 412, a third interface 413, and the like. The first interface 411 is connected to a side of the battery coolant pump 21 near the refrigerant heat exchanger 22, the second interface 412 is connected to a side of the power battery 23 near the second inlet 304, and the third interface 413 is connected to a side of the warm air coolant pump 42 away from the electric heater 43. When the first interface 411 is connected to the second interface 412, the battery auxiliary heating system 40 does not work. When the first interface 411 is connected to the third interface 413, the coolant in the battery temperature control system 20 enters the battery auxiliary heating system 40 through the second three-way proportional valve 41, and after being heated, enters the liquid mixing chamber 30 through the second inlet 304 and exchange heat with the coolant in the battery temperature control system 20, so as to heat the power battery 23. The warm air coolant pump 42, the electric heater 43, and the warm air core 44 are configured to heat the coolant to provide heat for the battery auxiliary heating system 40.

Referring to FIG. 1 to FIG. 3, in an embodiment of this application, the air conditioning system 50 includes a compressor 51, a condenser 52, an evaporator 53, a refrigerant heat exchanger 22, and the like. The air conditioning system 50 is configured to provide cooling capacity to the battery temperature control system 20 and the passenger compartment. The compressor 51, the condenser 52, and the refrigerant heat exchanger 22 are sequentially connected to form a loop. The evaporator 53 is disposed between the condenser 52 and the refrigerant heat exchanger 22, and is connected to the refrigerant heat exchanger 22 in parallel. On one hand, the compressor 51 extracts the gaseous refrigerant from the evaporator 53 and presses it into the condenser 52. The high-pressure gaseous refrigerant is liquefied by the condenser 52 to release heat to form high-pressure liquid refrigerant. The low-pressure liquid refrigerant, after throttling and pressure reduction, vaporizes in the evaporator 53 to absorb heat. The air near the evaporator 53 is cooled and enters the passenger compartment through a blower. The gaseous refrigerant is extracted by the compressor 51 and enters the condenser 52. The refrigerant circulates in a closed cycle in the loop, continuously expels heat inside the passenger compartment out of the car, thereby reducing the cabin temperature. On the other hand, the liquid refrigerant enters the refrigerant heat exchanger 22, absorbs the heat generated by charging and discharging of the battery, and turns into gaseous refrigerant, which is then drawn by the compressor 51 and liquefied into liquid refrigerant in the condenser 52. The refrigerant circulates in this loop and takes away the heat from the battery temperature control system 20.

Referring to FIG. 1 to FIG. 3, in an embodiment of this application, a lower part of the reservoir 60 is connected to the liquid mixing chamber 30, and an upper part is connected to the electric drive radiator 14. When the coolant absorbs the heat generated by the operation of the electric drive assembly 13 and the power battery 23, a large quantity of steam bubbles is generated. Before entering the coolant pump cycle, the bubbles enter the reservoir 60 to protect the pump. In addition, the reservoir 60 is directly connected to the liquid mixing chamber 30, so as to supplement coolant for the thermal management system of the vehicle.

Referring to FIG. 1 to FIG. 3, this application further discloses a new energy vehicle, and thermal management is performed by using the foregoing thermal management system. A working mode includes four types: a low temperature series heating mode, a medium temperature series heat dissipation mode, a high temperature parallel cooling mode, and an extreme cooling mode. Details are as follows.

Referring to FIG. 1 to FIG. 3, in the low-temperature series heating mode, the first port 111 and the second port 112 are fully connected, and the electric drive cooling system 10 and the battery temperature control system 20 are connected in series. The coolant in the electric drive cooling system 10 enters the liquid mixing chamber 30 by using the first inlet 303 of the liquid mixing chamber 30, leaves the liquid mixing chamber 30 from the second outlet 302, enters the battery temperature control system 20, flows through the refrigerant heat exchanger 22 and the power battery 23, enters the liquid mixing chamber 30 by using the second inlet 304, leaves the liquid mixing chamber 30 from the first outlet 301, and then returns to the electric drive cooling system 10. The electric drive assembly 13 outputs heat as a heat source, and introduces the coolant in the electric drive cooling system 10 into the battery temperature control system 20, so as to heat the power battery 23, so as to ensure that the battery runs at an optimal operating temperature. In addition, when the electric drive assembly 13 cannot meet a temperature requirement of the power battery 23, the first interface 411 is connected to the third interface 413. After the coolant in the battery temperature control system 20 is heated in the battery auxiliary heating system 40, the coolant enters the liquid mixing chamber 30 by using the second inlet 304 and then enters the battery temperature control system 20 by using the second outlet 302, and heats the power battery 23.

Referring to FIG. 1 to FIG. 3, in the medium temperature series heat dissipation mode, the first port 111 and the second port 112 are fully connected, and the electric drive cooling system 10 and the battery temperature control system 20 are connected in series. In this case, the ambient temperature can meet a heat dissipation requirement of the electric drive cooling system 10 and the battery temperature control system 20, and heat dissipation is performed on the electric drive cooling system 10 and the battery temperature control system 20 by using the electric drive radiator 14, and the air conditioning system 50 does not run, so as to save power.

Referring to FIG. 1 to FIG. 3, in the high temperature parallel cooling mode, the first port 111 and the third port 113 are fully connected, and the electric drive cooling system 10 and the battery temperature control system 20 are connected in parallel. The coolant in the electric drive cooling system 10 circulates only in the electric drive coolant pump 12, the electric drive assembly 13, and the electric drive radiator 14. The coolant in the battery temperature control system 20 circulates only in the battery coolant pump 21, the refrigerant heat exchanger 22, and the power battery 23. Because a high temperature cannot meet heat dissipation requirements of both the electric drive cooling system 10 and the battery temperature control system 20 at the same time, the electric drive cooling system 10 dissipates heat by using the electric drive radiator 14, and the battery temperature control system 20 dissipates heat by using the refrigerant heat exchanger 22. The two systems work independently, so as to meet an optimal operating temperature requirement of the electric drive assembly 13 and the power battery 23.

Referring to FIG. 1 to FIG. 3, in the extreme cooling mode, the first port 111 and the second port 112 are partially connected, the first port 111 and the third port 113 are partially connected, and the connection between the electric drive cooling system 10 and the battery temperature control system 20 includes both partial series and partial parallel configurations. A part of the coolant circulates in the battery temperature control system 20 or the electric drive cooling system 10, and the other part of the coolant circulates in the series circuit of the battery temperature control system 20 and the electric drive cooling system 10 by using the first three-way proportional valve 11 and the liquid mixing chamber 30. Due to an extreme high temperature, the electric drive radiator 14 alone cannot meet a heat dissipation requirement of the electric drive cooling system 10. Therefore, the coolant in the battery temperature control system 20 exchange heat with the coolant in the electric drive cooling system 10, so as to increase a cooling capacity of the electric drive cooling system 10. The opening degree of the first three-way proportional valve 11 is controlled according to the coolant temperature of the electric drive cooling system 10 and the battery temperature control system 20 to balance heat distribution between the two systems.

In conclusion, this application provides a thermal management system and use thereof. By introducing a first three-way proportional valve and a liquid mixing chamber with a simple structure, a connection structure between the electric drive cooling system and the battery temperature control system is optimized, and series, parallel, or partial series and partial parallel connection between the electric drive cooling system and the battery temperature control system is implemented, so that heat distribution between the two systems can be balanced, thereby ensuring vehicle safety. In addition, the reservoir is directly connected to the liquid mixing chamber with a simple structure, which accelerates the filling rate of the production line and improves the production rate of the whole vehicle.

The foregoing embodiments merely illustrate principles and effects of this application, but are not intended to limit this application. Any person skilled in the art may modify or alter the foregoing embodiments without departing from the spirit and scope of the present application. Therefore, all equivalent modifications or alterations completed by a person of ordinary skill in the art without departing from the spirit and technical ideas disclosed in this application shall still be covered by the claims of this application.

## Claims

1. A thermal management system, **characterized by** comprising:
an electric drive cooling system and a battery temperature control system;
a first three-way proportional valve, disposed in the electric drive cooling system or the battery temperature control system;
a liquid mixing chamber, wherein the liquid mixing chamber is disposed between the electric drive cooling system and the battery temperature control system, and the battery temperature control system is connected to the electric drive cooling system in series, in parallel, or partially in series and partially in parallel by using the first three-way proportional valve and the liquid mixing chamber;
a battery auxiliary heating system, wherein the battery auxiliary heating system comprises a second three-way proportional valve;
an air conditioning system, wherein the air conditioning system is connected to the battery temperature control system; and
a reservoir, wherein the reservoir is connected to the electric drive cooling system and the liquid mixing chamber.

2. The thermal management system according to claim 1, wherein the first three-way proportional valve comprises a first port, a second port, and a third port.

3. The thermal management system according to claim 2, wherein the electric drive cooling system and the battery temperature control system are connected in series in case that the first port and the second port are fully connected.

4. The thermal management system according to claim 2, wherein the electric drive cooling system and the battery temperature control system are connected in parallel in case that the first port and the third port are fully connected.

5. The thermal management system according to claim 2, wherein in a case that the first port and the second port are partially connected and the first port and the third port are partially connected, a connection between the electric drive cooling system and the battery temperature control system comprises both partial series and partial parallel configurations.

6. The thermal management system according to any one of claims 1 to 5, wherein a first outlet and a second outlet are disposed on an outer wall of the liquid mixing chamber, the first outlet is connected to one of the electric drive cooling system and the battery temperature control system, and the second outlet is connected to the other of the battery temperature control system and the electric drive cooling system.

7. The thermal management system according to any one of claims 1 to 6, wherein a first inlet and a second inlet are further disposed on an outer wall of the liquid mixing chamber, the first inlet is connected to one of the electric drive cooling system and the battery temperature control system, and the second inlet is connected to the other of the battery temperature control system and the electric drive cooling system.

8. The thermal management system according to claim 7, wherein the battery auxiliary heating system is disposed on a side adjacent to the second inlet, and is connected to the battery temperature control system via pipeline.

9. The thermal management system according to any one of claims 1 to 8, wherein the second three-way proportional valve comprises a first interface, and the first interface is connected to the battery temperature control system.

10. A new energy vehicle, **characterized by** comprising the thermal management system according to any one of claims 1 to 9.
